# EUROPÄISCHE PATENTSCHRIFT

(11) **EP 0 683 875 B1**
(45) Veröffentlichungstag und Bekanntmachung des Hinweises auf die Patenterteilung: **08.04.1998**
(21) Anmeldenummer: 95904487.6
(22) Anmeldetag: 16.12.1994
(51) Int. Cl.: F16H 47/04

(54) **STUFENLOSES HYDROSTATISCHES LEISTUNGSVERZWEIGUNGSGETRIEBE**
CONTINUOUSLY VARIABLE HYDROSTATIC POWER-SPLIT TRANSMISSION
TRANSMISSION HYDROSTATIQUE VARIABLE A DIVISION DE PUISSANCE

(30) Priorität: 18.12.1993 DE 4343402
(43) Veröffentlichungstag der Anmeldung: 29.11.1995
(73) Patentinhaber: J.M. Voith GmbH, D-89522 Heidenheim (DE)
(72) Erfinder: ENGLISCH, Andreas, D-89447 Zöschingen (DE)
(74) Vertreter: Weitzel, Wolfgang, Dr.-Ing. Patentanwalt
(86) Internationale Anmeldenummer: EP9404184
(87) Internationale Veröffentlichungsnummer: WO9516868

(56) Entgegenhaltungen:
- EP-A- 0 450 282
- DE-A- 2 810 086
- DE-A- 2 904 572
- DE-A- 3 624 989
- US-A- 3 052 098

## Beschreibung

Die Erfindung betrifft ein stufenloses hydrostatisches Leistungsverzweigungsgetriebe, insbesondere den hydrostatischen Getriebeteil dieses Getriebes, im einzelnen mit den Merkmalen des Oberbegriffes aus Anspruch 1.

Stufenlose hydrostatische Leistungsverzweigungsgetriebe, im folgenden nur kurz SHL-Getriebe genannt, ermöglichen den Wechsel von Gängen ohne Zugkraftunterbrechung bei synchronen Drehzahlen und lastfrei. Das Prinzip und der Aufbau stufenloser hydrostatischer Leistungsverzweigungsgetriebe sind beispielsweise aus den Druckschriften
1) DE-A-28 10 086
2) DE 29 045 72 C2 bekannt.

Derartige Getriebe umfassen einen hydrostatischen und einen mechanischen Getriebeteil, die derart miteinander gekoppelt sind, daß die zu übertragende Leistung zu bestimmten Teilen in den einzelnen Fahrbereichen hydraulisch und/oder mechanisch übertragen wird. Die Leistungsverzweigung ermöglicht es, daß der Wirkungsgrad gegenüber einem rein mechanischen oder einem rein hydrostatischen Getriebe wesentlich verbessert wird. Beide Hydrostatikeinheiten sind jeweils als Pumpe und als Motor beitreibbar.

Die auf der Grundlage der konventionellen Lösungen für den Einsatz im PKW- und NKW-Bereich bisher realisierten Getriebe weisen gegenüber den Wandlerautomatgetrieben wesentlich größere Bauabmessungen und ein entsprechend erhöhtes Gewicht auf und sind kostenungünstiger.

Aufgrund günstiger Eigenschaften, wie beispielsweise ein hohes Anlaufdrehmoment, eine größere Unempfindlichkeit des Systems, ein großer Regelbereich bei Verstellmotoren, ein im wesentlichen höherer Wirkungsgrad sowie die Möglichkeit höherer Grenzdrehzahlen und Übersetzungen werden die beiden Hydroeinheiten als Schrägachseneinheiten, die als Pumpe und als Motor betreibbar sind, ausgeführt. Problematisch sind jedoch auch die allgemein bei hydrostatischen Getrieben vorherrschenden großen Abmessungen und die hohe Geräuschemmission.

Die EP 0 450 282 A2 offenbart eine Ausführung eines hydrostatischen Leistungsverzweigungsgetriebes, bei welchem der mechanische Getriebeteil und der hydrostatische Getriebeteil, umfassend zwei miteinander energetisch gekoppelte Hydroeinheiten, hintereinander in einem Gehäuse angeordnet sind, wobei beide Getriebeteile über eine entsprechende Gehäusewand voneinander getrennt sind. Die Getriebeeinheit weist daher eine beträchtliche Baugröße auf.

Desweiteren ist eine Integration von Schrägachsenhydrostaten in einem derartigen SHL-Getriebe-Konzept bisher nicht derart möglich gewesen, daß auch eine optimale Anordnung der übrigen Komponenten mit vertretbarem Fertigungsaufwand erfolgen konnte. Im allgemeinen sind die Hydrostatikeinheiten in den konventionellen Lösungen außen am Getriebegehäuse des mechanischen Getriebeteils angeflanscht, d.h., daß auch alle hochdruckführenden Teile außerhalb des Getriebegehäuses angeordnet sind. Eine Optimierung der Baugröße der Hydrostaten war bisher nicht möglich, da die Vorgelegeübersetzungen durch die Achsabstände und die Wellendurchmesser begrenzt wurden und die Anfahrzugkraft als wesentliches Auslegungskriterium für die einzusetzenden Hydroeinheiten galt. Die Realisierung eines marktfähigen Getriebes bezüglich Baugröße und Kosten ist somit bis jetzt nur sehr eingeschränkt möglich.

Bei einer Ausführung gemäß der DE 36 24 989 C2, bei welcher die beiden Hydroeinheiten mit einem Verbindungs- oder Steuerblock als vormontierte Einheiten verwendet werden, ist das Getriebe sehr kompakt ausgeführt. Die Hydrostaten sind im Kernschatten des Planetenradgetriebes und die Steuerköpfe der Hydrostaten sind in einem derartigen Winkel zueinander angeordnet, daß sich deren Enden fast berühren und sich tangential zum Hüllkreis nach oben oder unten erstrecken, wodurch der kleinste Einbauraum erzielt wird. Wesentliche Nachteile einer derartigen Anordnung bestehen vor allem in dem erhöhten Fertigungsaufwand für die An- Anbringung des Steuerblockes und Realisierung der energetischen Kopplung der Hydroeinheiten aufgrund der winkligen Anordnung der Steuerköpfe und damit dem Vorsehen dafür ausgelegter Flansche, des weiteren besteht auch keine Möglichkeit für der Reduzierung der Baugröße der Hydroeinheiten.

Die US 3,052,098 offenbart eine Ausführung einer Getriebebaueinheit mit im wesentlichen hintereinander angeordnetem mechanischen und hydraulischen Getriebeteil, wobei durch eine entsprechende Anordnung der Hydroeinheiten nebeneinander und versetzt die Kompaktheit der Getriebebaueinheit erhöht werden soll. Auch bei dieser Ausführung besteht ein wesentlicher Nachteil in einem erhöhten Fertigungsaufwand für die Anbringung entsprechender Steuerungseinheiten und der Realisierung der energetischen Kopplung aufgrund der winkligen Anordnung der Steuerköpfe.

Die Aufgabe der Erfindung besteht deshalb darin, die genannten Nachteile zu vermeiden und ein SHL-Getriebe der eingangs genannten Art derart weiterzuentwickeln, daß ein in Baugröße und Kosten marktfähiges Getriebe realisierbar ist. Die Abmessungen und das Gewicht des Getriebes sind unter Verwendung marktüblicher hydrostatischer Komponenten soweit zu reduzieren, daß diese die Größenordnung heute marktüblicher Getriebe, beispielsweise Wandlergetriebe, erreichen, ohne daß technische Nachteile in Kauf genommen werden müssen. Gleichzeitig ist es für den Einsatz von SHL-Getrieben im PKW- und NKW-Bereich von enormer Bedeutung die beiden Hydroeinheiten akkustisch vom Gehäuse zu entkoppeln, um die Geräuschemmission, die vor allem durch den hydrostatischen Getriebeteil bedingt ist, weitestgehend zu vermindern.

Die Aufgabe wird durch die kennzeichnenden Merkmale des Anspruches 1 gelöst. Vorteilhafte Ausführungen sind in den Unteransprüchen wiedergegeben.

Durch diese Anordnung der beiden Hydroeinheiten in Schrägachsenbauweise derart nebeneinander besteht die Möglichkeit der Integration der Hydroeinheiten zusammen mit dem mechanischen Getriebeteil in einem gemeinsamen Getriebegehäuse, vorzugsweise unter- oder oberhalb des mechanischen Getriebeteils in Einbaulage. Eine seitliche, d.h. eine erfindungsgemäße Anordnung in vertikaler Richtung bzw. Einbaulage, ist ebenfalls bei Verlagerung des Ölsumpfes denkbar. Der hydrostatische Getriebeteil kann im Bereich des mechanischen Getriebeteiles angeordnet sein, ohne daß die Abmessungen des Gesamtgetriebes in Bezug auf den rein mechanischen Getriebeteil vergrößert werden. Um die Abmessungen der Gesamtbaugruppe so gering wie möglich zu halten, sind die Schrägachsenhydrostaten vorzugsweise derart zueinander angeordnet, daß die Trommeln der Hydroeinheiten im ausgeschwenkten Zustand zueinander hin gerichtet sind.

Die Verlängerungen der Symmetrieachsen von An-bzw. Abtriebswellen einer jeden Hydroeinheit und die durch die Schnittpunkte der Außenkonturen einer jeden Hydroeinheit mit den Symmetrieachsen gelegten Geraden beschreiben ein Parallelogramm. Die energetische Kopplung der beiden Hydroeinheiten erfolgt dabei durch Rohrleitungen, die zwischen den beiden Hydroeinheiten derart angeordnet sind, daß diese im wesentlichen eine Diagonale des Parallelogrammes beschreiben.

Die Integration der Hydroeinheiten mit dem mechanischen Getriebeteil in einem gemeinsamen Getriebegehäuse wird ein Getriebe in kompakter Form geschaffen in welches auch die hochdruckführenden Teile des hydrostatischen Getriebeteiles mit integriert sind, so daß im Fall einer Leckage kein Öl nach außen treten kann. Das Vorsehen wenigstens einer zusätzlichen Zwischenwelle ermöglicht die Erhöhung der Anfahrübersetzung einer Hydroeinheit und damit die Verwendung kleinerer Hydrostaten, wodurch diese letztendlich in deren Bauabmessungen besser an das Gesamtgetriebekonzept angepaßt werden können. Des weiteren wird durch die Übersetzung die Verwendung von im Aufbau und der Auslegung gleicher Hydroeinheiten möglich. Bei Verwendung unterschiedlicher Hydroeinheiten kann der baugrößenmäßige Sprung beträchtlich reduziert werden.

Vorzugsweise werden als Hydroeinheiten in Schrägachsenbauweise Hydroeinheiten der gleichen Baureihe eingesetzt, d.h. die gleichen Hydroeinheiten bezüglich Aufbau, Baugröße und Auslegung. Die Anordnung der zweiten Hydroeinheit neben der ersten Hydroeinheit erfolgt derart, daß zwischen beiden Hydroeinheiten eine Achse existiert bezüglich der beide Hydroeinheiten achssymmetrisch zueinander angeordnet sind. Die Lage der zweiten Hydroeinheit ergibt sich dabei durch Drehung um 180° um diese Achse, die senkrecht zu einer durch die Symmetrieachsen der An-bzw. Abtriebswellen der Hydroeinheiten festgelegten Ebene gerichtet ist. Die Lage der Achse ist derart gewählt, daß beide Hydroeinheiten unmittelbar nebeneinander ohne wesentlichen Versatz in Richtung der Symmetrieachsen angeordnet sind. Die Verlängerung der Symmetrieachsen der An-bzw. Abtriebswelle einer jeden Hydroeinheit und die durch die Schnittpunkte der Außenkonturen der Hydroeinheiten mit den verlängerten Symmetrieachsen gelegten Geraden beschreiben in diesem Fall ein Rechteck. Die hydraulischen Verbindungsleitungen, vorzugsweise in Form von Rohren ausgeführt, sind zwischen beiden Hydroeinheiten angeordnet und beschreiben im wesentlichen eine Diagonale des Rechteckes. Im Zusammenhang mit einem Quersteg oder den zwischen beiden Hydroeinheiten angeordneten Verbindungsleitungen beschreiben die beiden Hydroeinheiten jeweils die Form eines Z's, weshalb diese Anordnung auch als Z-Anordnung bezeichnet werden kann. Beide Hydroeinheiten sind parallel, jedoch seitenverkehrt zueinander angeordnet. Besonders positiv an dieser Ausführung ist, daß diese Anordnung im Gesamtgetriebe gegenüber konventionell ausgeführten Getriebeanordnungen am wenigsten Bauraum beansprucht und somit die Möglichkeit der Schaffung eines sehr kompakt aufgebauten Gesamtgetriebes besteht.

Aufgrund der Anordnung von An- bzw. Abtriebswellen der einzelnen Hydrostaten und deren Trommelachsen in einer gemeinsamen Ebene ist kein zusätzlicher Fertigungsaufwand bei der Herstellung der Hydrostaten für die Realisierung der energetischen Kopplung zwischen diesen erforderlich, analog dazu zur Integration des Steuerblockes.

Der Steuerblock ist vorzugsweise im Verbindungsblock integriert. Bei entsprechender Anordnung der einzelnen Ventil funktionen kann der Steuerblock und der Verbindungsblock symmetrisch aufgebaut sein. Zusätzlich besteht die Möglichkeit auch die Verstellung bzw. Verstelleinrichtungen der Hydroeinheiten in den Verbindungsblock mit zu integrieren.
Dies bietet den Vorteil, daß der Verbindungsblock ohne Berücksichtigung der Anschlüsse bzw. der Gestaltung der Anschlußseiten an den Gehäuseendflächen der einzelnen Hydroeinheiten anordnbar ist, d.h. der Verbindungsblock kann auch um 180° gedreht eingebaut werden. Eine weitere Möglichkeit, um die gesamte Einheit wesentlich kompakter zu gestalten, besteht darin, die Gehäuseendteile der Hydroeinheiten in den Verbindungsblock mit zu integrieren.

Bei den im Oberbegriff des Anspruches 1 beschriebenen Getrieben kann die Anordnung der Hydroeinheiten im Bereich des Außenkranzes des Planetendifferentialgetriebes erfolgen, wobei der Achsabstand zwischen den An-bzw. Abtriebswellen der beiden Hydroeinheiten von der Größe des Planetendifferentialgetriebes abhängig ist.

Ein bedeutender Vorteil dieser Anordnung besteht weiterhin darin, daß die beiden Hydroeinheiten zu einer Baugruppe zusammengefaßt werden können, die als Ganzes, d.h. als eine Baugruppe, vormontiert, geprüft und in das Getriebe eingebaut werden kann. Die beiden Hydroeinheiten sind dazu durch wenigstens eine Brücke bzw. einen Quersteg starr miteinander verbunden. Die Verbindung erfolgt vorzugsweise durch am Gehäuse angebrachte Querstege. Die gesamte Baugruppe kann gemäß Anspruch 12 elastisch im Getriebe aufgehangen werden.

Vorteilhaft gestaltet sich die Integration des hydrostatischen Getriebeteiles in einem Getriebegehäuse zusammen mit mechanischen Teil. Die hochdruckführenden Teile sind alle im Gehäuse integriert, so daß im Fall einer Leckage kein Öl nach außen gelangen kann. Der hydrostatische Getriebeteil läßt sich in Form einer Baugruppe leicht handhaben und montieren. Ein SHL-Getriebe mit der erfindungsgemäßen Anordnung der Hydroeinheiten zeichnet sich gegenüber den SHL-Getrieben mit den konventionell angeordneten Hydroeinheiten durch geringere Abmessungen des Gesamtgetriebes, eine geringere Geräuschemmission und geringere Kosten aus.

Die Größe der Achsabstände zwischen den Symmetrieachsen der An-bzw. Abtriebswellen der Hydroeinheiten kann minimiert werden, ist aber abhängig vom Aufbau des mechanischen Getriebeteiles und der Anordnung der hydrostatischen Getriebeteile im Gesamtgetriebe.

Unter einem weiteren Aspekt der erfindungsgemäßen Anordnung der beiden Hydrostatikeinheiten derart nebeneinander, daß sich die Lage der einen Hydroeinheit durch Drehung der anderen Hydroeinheit um 180° um eine Achse, die senkrecht zu einer durch die Symmetrieachsen der An-bzw. Abtriebswellen der Hydroeinheiten beschriebenen Ebene gerichtet ist, ergibt, und deren Versatz in Richtung der Symmetriechsen im wesentlichen Null beträgt, sowie die Verbindung der beiden Hydroeinheiten mittels wenigstens einem Quersteg erfolgt, kann ein rein hydrostatisches Getriebe in sehr kompakter Form geschaffen werden. Die Trommelachsen der einzelnen Hydroeinheiten liegen dabei in einer Ebene. Die Baugruppe zeichnet sich durch eine einfache und leichte Handhabung aus und kann komplett vormontiert und geprüft bezogen werden.

Die erfindungsgemäße Lösung der Aufgabe ist nachfolgend anhand von Figuren erläutert. Darin sind im einzelnen dargestellt:
- Fig. 1: zeigt eine erfindungsgemäße Anordnung zweier Hydroeinheiten in einer Baugruppe;
- Fig. 2: verdeutlicht schematisch eine erfindungsgemäße Anordnung der Hydroeinheiten in Z-Anordnung in einem SHL-Getriebe;

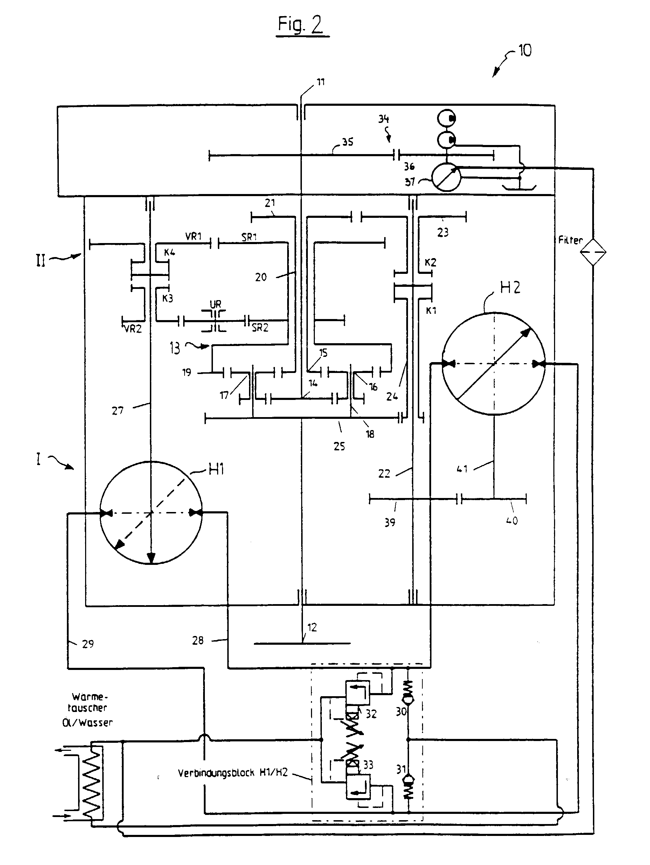

- Fig. 2: verdeutlicht schematisch die Ankoppelung der Hydroeinheiten in Z-Anordnung in einem SHL-Getriebe;

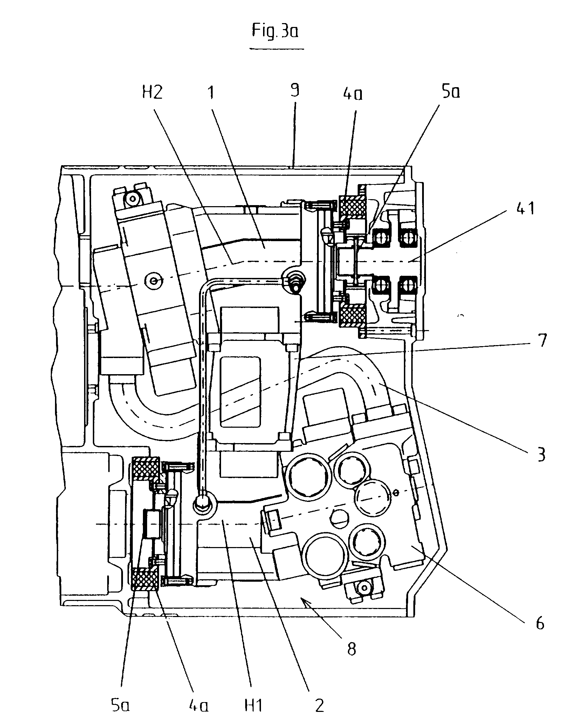

- Fig. 3a bis c: verdeutlichen die konstruktive Umsetzung innerhalb des Gesamtgetriebekonzeptes gemäß Figur 2 mit angeflanschtem Steuerblock.

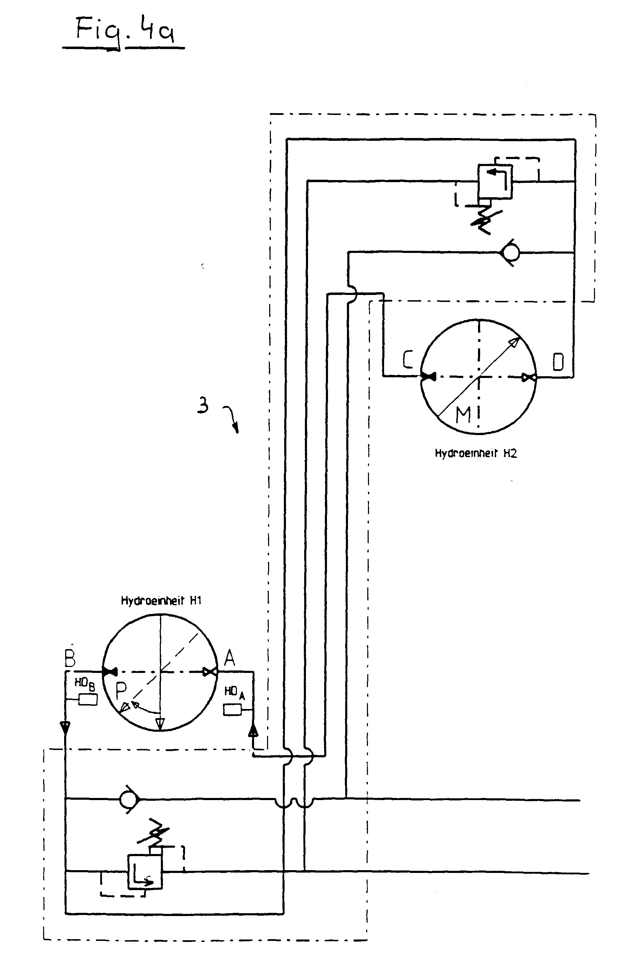

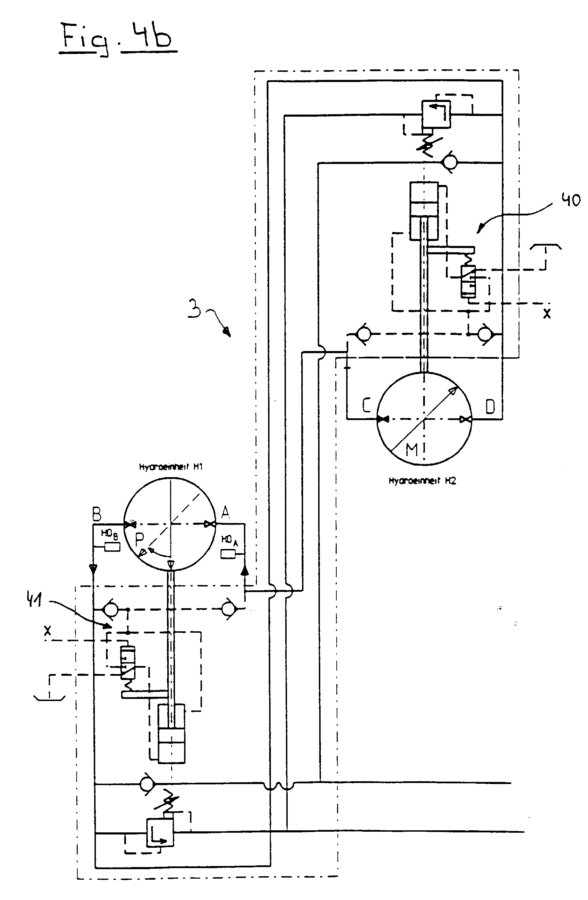

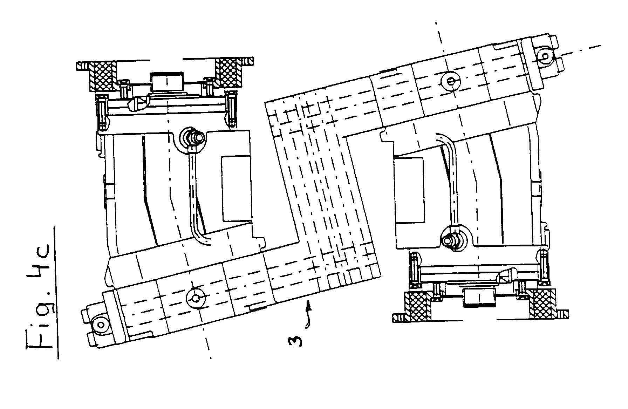

- Fig. 4a bis 4c: verdeutlichen schematisch weitere Möglichkeiten der Ausführung des Steuerblockes.

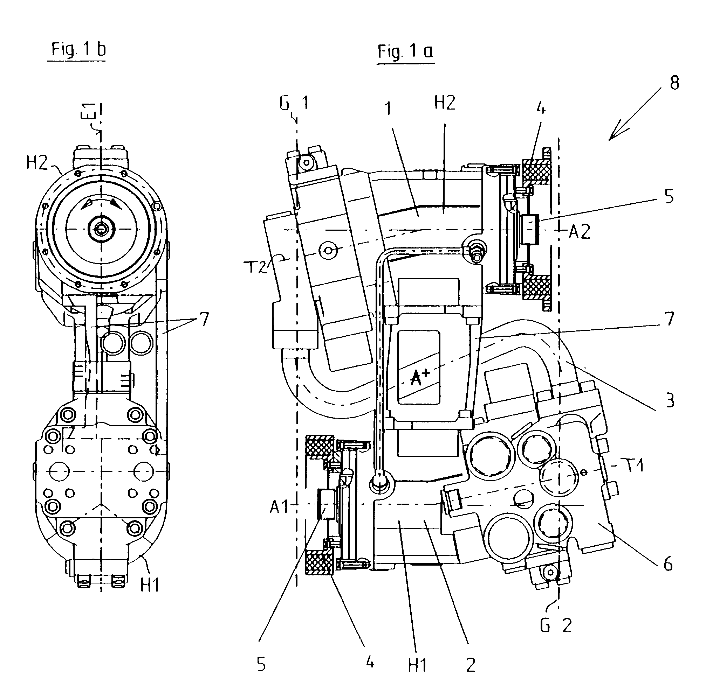

Die Figur 1 verdeutlicht eine bevorzugte Ausführung der erfindungsgemäßen Anordnung zweier Hydrostatikeinheiten H1 und H2 in Schrägachsenbauweise und deren Zusammenfassung zu einer Baugruppe. Die beiden vorzugsweise handelsüblichen Hydroeinheiten H1 und H2 sind in einer Ebene E1, wie aus Figur 1b ersichtlich, angeordnet. Die Ebene E1 wird durch die Symmetrieachsen A1 und A2 der An- bzw. Abtriebswellen der einzelnen Hydroeinheiten H1 und H2 bestimmt. Vorzugsweise sind beide Hydroeinheiten gleich ausgelegt. Beide Hydroeinheiten sind achssymmetrisch bezüglich einer Achse A, die senkrecht zur Ebene E1 gerichtet ist, angeordnet, d.h. die Lage der Hydroeinheit H2 läßt sich durch Drehung der Hydroeinheit H1 um 180° um die Achse A beschreiben. Die Lage der Achse A ist so gewählt, daß beide Hydroeinheiten H1 und H2 unmittelbar nebeneinander angeordnet sind ohne Versatz in Richtung der Symmetrieachsen ihrer An-bzw. Abtriebswellen. Die Verlängerung der Symmetrieachsen A1 und A2 der An-bzw. Abtriebswellen jeder Hydroeinheit H1 und H2 und die durch die Schnittpunkte der Außenkonturen der Hydroeinheiten mit den Symmetrieachsen gelegten Geraden G1 und G2 beschreiben ein Rechteck. Die Trommelachsen T1 und T2 der Hydroeinheiten H1 und H2 liegen ebenfalls in einer gemeinsamen Ebene, die gleich der Ebene E1 ist, die durch die Symmetrieachsen A1 und A2 der An-bzw. Abtriebswellen der beiden Hydroeinheiten H1 und H2 beschrieben wird.

Beide Hydroeinheiten sind hydraulisch über einen Verbindungsblock, umfassend Verbindungsleitungen, im dargestellten Fall in Form von Rohrleitungen 3, miteinander gekoppelt. Diese sind zwischen den beiden Hydroeinheiten H1 und H2 angeordnet. Vorzugsweise sind beide Hydroeinheiten über wenigstens einen Quersteg 7 starr miteinander zu einer baulichen Einheit (Baugruppe 8) verbunden. Der Quersteg 7 ist jeweils an den Gehäusen der beiden Hydroeinheiten angelenkt. Die Ventilfunktionen sind in einem Steuerblock 6 integriert. Dieser Steuerblock 6 ist im dargestellten Beispiel an der Hydroeinheit H2 angeordnet, um die Ventile im Falle einer Verschmutzung von außen zugänglich zu halten. Es besteht jedoch auch die Möglichkeit, den Steuerblock 6 direkt in den Rohrleitungen 3 zu integrieren.

Die gesamte Baugruppe 8 ist über elastische Elemente 4 mit dem Getriebegehäuse, hier nicht dargestellt, verbindbar und kann über die Kupplungen 5a und 5b mit den entsprechenden Wellen, beispielsweise mit den Wellen des mechanischen Getriebeteiles eines SHL-Getriebes gekoppelt werden.

Die Figur 2 gibt schematisch die Anordnung der beiden Hydroeinheiten in einem SHL-Getriebekonzept gemäß einem betriebsinternen Vorschlag wieder. Das in seiner Gesamtheit mit 10 bezeichnete Leistungsverzweigungsgetriebe besteht aus einem hydrostatischen Getriebeteil I, umfassend die zwei als Pumpe und Motor betreibbaren Hydroeinheiten H1 und H2, und einem mechanischen Getriebeteil II. Auf der Seite der Getriebeeingangswelle 11 ist eine, hier nicht dargestellte Antriebsmaschine angeschlossen. Eine Getriebeausgangswelle des Leistungsverzweigungsgetriebes 10 ist mit 12 bezeichnet. Zwischen Getriebeeingangswelle 11 und Getriebeausgangswelle 12 ist ein Planetendifferentialgetriebe 13, umfassend ein großes Sonnenrad 14, ein kleines Sonnenrad 15, Doppelplanetenräder 16 und 17, eine Stegwelle 18 und ein Hohlrad 19, geschaltet. Das große Sonnenrad 14 ist drehfest mit der Getriebeeingangswelle 11 verbunden. Das kleine Sonnenrad 15 ist drehfest mit einer Hohlwelle 20 verbunden, auf der wiederum drehfest ein Zahnrad 21 angeordnet ist. Das Zahnrad 21 kämmt mit einem drehbar auf einer Welle 22 angeordneten Zahnrad 23. Ein Zahnrad 39 ist drehfest mit der Welle 22 verbunden und kämmt mit einem Zahnrad 40, welches mit einer Welle 41 drehfest in Verbindung steht, die als An- bzw. Abtriebswelle der Hydroeinheit H2 fungiert. Die Welle 22 stellt die mechanische Verbindung als Zwischenwelle zwischen der Hydroeinheit H2 und dem Planetendifferentialgetriebe 13 her. Weiterhin ist mit der Welle 22 ein Zahnrad 24 mittels einer Kupplung K1 drehfest verbindbar, das mit einem drehfest mit der Getriebeausgangswelle 12 verbundenen Zahnrad 25 in Eingriff steht. Mit Hilfe einer Kupplung K2 kann das Zahnrad 23 mit der Welle 22 drehfest gekoppelt werden.

Ein Stirnrad SR₁ und ein Stirnrad SR₂ sind mit dem Hohlrad 19 drehfest verbunden. Das Stirnrad SR₁ kämmt mit einem Vorgelegerad VR₁ und das Stirnrad SR₂ über ein Umkehrrad UR mit einem Vorgelegerad VR₂. Beide Vorgelegeräder VR₁ und VR₂ sind mit den Schaltkupplungen K3 und K4 wahlweise mit einer Welle 27, die als An- bzw. Abtriebswelle der Hydroeinheit H1 fungiert, kuppelbar.

Die Hydroeinheiten H1 und H2 sind über die Verbindungsleitungen 28 und 29 miteinander verbunden. Die hydrostatische Verkopplung der Hydroeinheit H1 mit H2 erfolgt durch den Steuerblock H1/H2, der zwei Rückschlagventile 30 und 31 zur Einspeisung der Leckölmenge und zwei Überdruckventile 32 und 33 zur Maximaldruckbegrenzung umfaßt.

Die Ölversorgung der Hydroeinheiten erfolgt durch eine von der Antriebsmaschine über eine Stirnradstufe 34, umfassend ein mit der Getriebeiengangswelle 11 drehfest verbundenes Stirnrad 35, welches mit einem mit der Antriebswelle 36 einer Speisepumpe 37 drehfest verbundenen Stirnrad 38 im Eingriff steht, angetriebene Speisepumpe 37.

Die Drehzahl der Getriebeausgangswelle 12 summiert sich aus den Drehzahlen des großen Sonnenrades 14 und des Hohlrades 19, welche die Umlaufgeschwindigkeit der Planetenräder 16 und 17 bzw. der Stegwelle 18 festlegen.

Die beiden Hydroeinheiten H1 und H2 sind in der Draufsicht gesehen derart angeordnet, daß deren An- bzw. Abtriebswellen 14 und 27 zueinander entgegengesetzt gerichtet sind, wodurch gegenüber der betriebsinternen Lösung die weitere Zwischenstufe 39/40 integrierbar wurde. Diese hat den Vorteil, daß die Übersetzung zur Hydroeinheit H2 um ca. 50% erhöhbar ist, ohne daß die Grenzdrehzahlen der Hydrostaten überschritten werden.

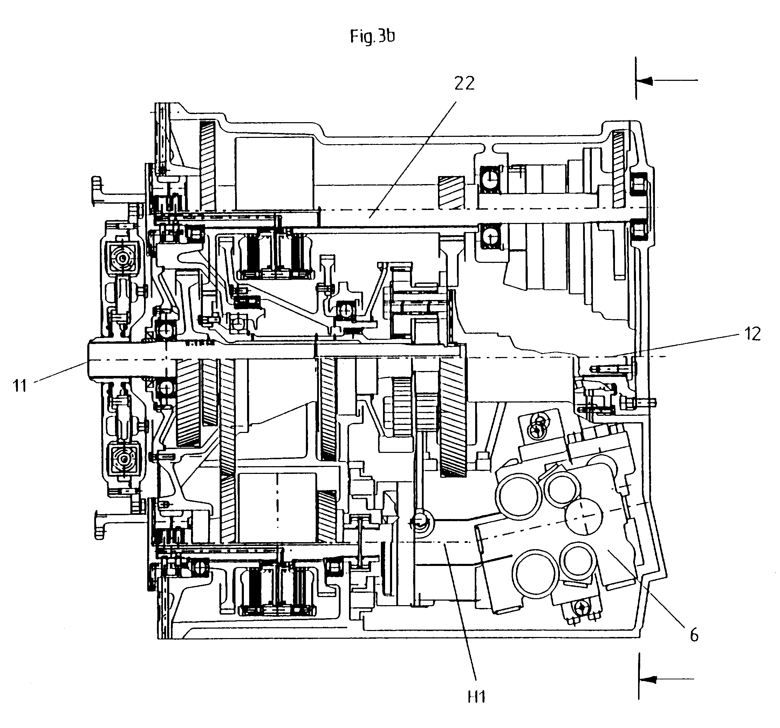

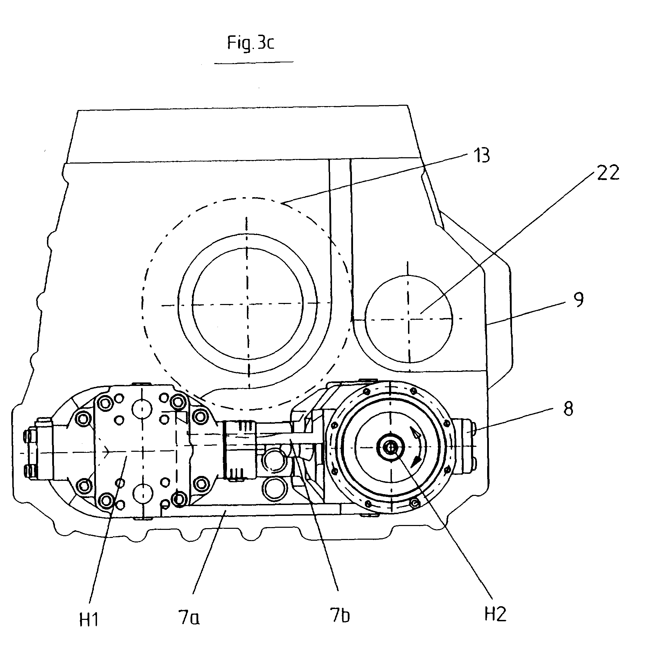

Die Figuren 3 verdeutlichen die konstruktive Umsetzung der Anordnung der beiden Hydroeinheiten in einer Baugruppe 8 gemäß Figur 1 in einem Gesamtgetriebekonzept eines stufenlosen hydrostatischen Leistungsverzweigungsgetriebes gemäß Figur 2. Für gleiche Elemente sind deshalb in der folgenden Beschreibung gleiche Bezugszeichen verwendet.

Die Figur 3a verdeutlicht dabei die Anordnung der in Figur 1 bereits genauer beschriebenen Baugruppe 8 in einem Gesamtgetriebekonzept gemäß Figur 2 in der Draufsicht, wobei der mechanische Getriebeteil aus Gründen der Übersichtlichkeit nicht mit dargestellt ist.
Die mittels der Querstege 7 zu einer Baugruppe 8 zusammengefaßten Hydroeinheiten H1 und H2 sind mittels der elastischen Elemente 4a und 4b, mit einem Getriebegehäuse 9 verbunden. In diesem Getriebegehäuse 9 ist gleichfalls auch der mechanische Getriebeteil I, der hier aus Gründen der Übersichtlichkeit nicht mit dargestellt ist, integriert. Die Hydroeinheiten H1 und H2 sind über die Kupplungen 5a und 5b, die beispielsweise in Form von Bogenzahnkupplungen ausgebildet sein können, mit den Wellen 27 und 41 gekoppelt. Über die mit diesen Wellen drehfest verbundenen Stirnräder, welche im einzelnen nicht dargestellt sind, sind die Hydroeinheiten mit dem Planetendifferentialgetriebe gekoppelt.

Die Figur 3b verdeutlicht die in Figur 3a dargestellte Draufsicht mit dargestellten mechanischem Getriebeteil. Die Hydroeinheit H2 ist unterhalb der Zwischenwelle 22 angeordnet.

Die Figur 3c verdeutlicht einen Schnitt durch das Getriebe gemäß Figur 3b. Aus dieser Darstellung wird ersichtlich, daß bei Hydroeinheiten kleiner Baugröße auch die Möglichkeit besteht, diese im wesentlichen unterhalb des Außenkranzes des Planetendifferentialgetriebes 13 anzuordnen. Angedeutet sind hier jedoch nur die Kopfkreisdurchmesser einzelner Elemente des Planetendifferentialgetriebes 13. Im dargestellten Fall erfolgt die Anordnung jedoch im Zusammenhang mit der in Figur 3b erfolgten Darstellung unterhalb des Hohlrades 19 und unterhalb des mit der Stegwelle 18 verbundenen Stirnrades 25. Dies hat den Vorteil, daß der in axialer Richtung durch den mechanischen Teil des Getriebes bereits beanspruchten Bauraum in dieser Richtung nicht vergrößert werden muß, wie bei einer eventuell versetzten Anordnung von mechanischem und hydrostatischem Getriebeteil in axialer Richtung. Beide Hydroeinheiten sind im Getriebesumpf angeordnet.

Die Figur 4a verdeutlicht schematisch und beispielshaft die Integration des Steuerblocks mit zwei Druckbegrenzungsventilen im Verbindungsblock 3. Vorzugsweise ist der Steuerblock derart gestaltet, daß jeder Hydroeinheit H1 und H2 ein Druckbegrenzungsventil auf der Hochdruckseite zugeordnet ist. Dies bietet den Vorteil, daß der Steuerblock 6 und somit auch der Verbindungsblock 3 symmetrisch aufgebaut werden können, wodurch der Verbindungsblock ohne Berücksichtigung der Anschlüsse bzw. der Gestaltung der Anschlußseiten an den Gehäuseendflächen der einzelnen Hydroeinheiten anordnbar ist.

Die Figur 4b verdeutlicht beispielhaft die zusätzliche Integration der Hydrostatverstellungen (40, 41) im Verbindungsblock 3.

Die Figur 4c verdeutlicht schematisch und sehr vereinfacht die konstruktive Ausführung. Der Verbindungsblock (3) kann am Endgehäuse der jeweiligen Hydroeinheit H1 und H2 angeflanscht werden. Es besteht jedoch auch die Möglichkeit, das Endgehäuse der Hydrostaten mit in den Verbindungsblock zu integrieren.

Unter einem anderen Aspekt der Erfindung können hydrostatische Getriebe ebenfalls in Form der hier beschriebenen Baugruppe ausgeführt sein, wenn An- und Abtrieb nicht sehr weit voneinander entfernt angeordnet sind.

## Patentansprüche

1. Stufenloses hydrostatisch-mechanisches Leistungsverzweigungsgetriebe, umfassend einen ersten, mechanischen Getriebeteil und einen zweiten, hydrostatischen Getriebeteil;
1.1 der mechanische Getriebeteil (II) umfaßt ein Planetendifferentialgetriebe (13), welches mindestens zwei Sonnenräder (14, 15) unterschiedlichen Durchmessers, ein Hohlrad (19) und eine Stegwelle (18), auf der Doppelplanetenräder (16, 17) (drehfest verbundene Planetenräder) angeordnet sind, die mit den Sonnenrädern (14, 15) kämmen, aufweist, wobei das große Sonnenrad (14) mit der Getriebeeingangswelle (11) und die Stegwelle (18) mit der Getriebeausgangswelle (12) verbunden ist;
1.2 der hydrostatische Getriebeteil (I) umfaßt zwei energetisch miteinander gekoppelte, in beiden Richtungen als Pumpe oder Motor betreibbare, verstellbare Hydroeinheiten (H1, H2), die mit dem mechanischen Teil (II) gekoppelt sind;
1.3 wobei in den einzelnen Betriebsbereichen das Hohlrad (19) zur Steuerung der Drehrichtung und der Drehzahl der Getriebeausgangswelle (12) mit einer ersten Hydroeinheit (H1) gekoppelt ist;
1.4 im ersten Betriebsbereich die zweite Hydroeinheit (H2) über ein Wechsel-Schaltelement (K1/K2) mit der Getriebeausgangswelle (12) in Antriebsverbindung steht und die erste, mit dem Hohlrad (19) verbundene Hydroeinheit (H1) als Pumpe und die zweite Hydroeinheit (H2) als Motor arbeitet;
1.5 die Hydroeinheiten (H1, H2) sind in Schrägachsenbauweise ausgeführt;
1.6 die An-bzw. Abtriebswellen (27, 41) der Hydroeinheiten (H1, H2) verlaufen parallel zueinander;
1.7 beide Hydroeinheiten (H1, H2) sind innerhalb des Getriebegehäuses (9) angeordnet;
1.8 den Hydroeinheiten ist wenigstens ein Steuerblock zur Aufnahme der Ventilfunktionen zugeordnet;
gekennzeichnet durch das folgende Merkmal:
1.9 beide Hydroeinheiten (H1, H2) sind derart nebeneinander angeordnet, daß deren An-bzw. Abtriebswellen (27, 41) einander entgegengesetzt gerichtet sind;
1.10 die Trommelachsen (T1, T2) der Hydroeinheiten (H1, H2) liegen in einer Ebene (E1);
1.11 zwischen dem Planetendifferentialgetriebe (13) und der zweiten Hydroeinheit (H2) ist wenigstens eine zusätzliche Stirnradstufe (39/40) vorgesehen;
1.12 die Lage der zweiten Hydroeinheit (H2) ist durch Drehung der ersten Hydroeinheit um eine Achse (A) um 180° beschreibbar;
1.13 die Lage der Achse (A) ist derart gewählt, daß der Versatz zwischen beiden Hydroeinheiten (H1, H2) in Richtung der Symmetrieachsen der An-bzw. Abtriebswellen der Hydroeinheiten nahezu null ist.

2. Stufenloses hydrostatisch-mechanisches Leistungsverzweigungsgetriebe nach Anspruch 1, dadurch gekennzeichnet, daß die Hydroeinheiten (H1, H2) bezüglich Baugröße und Auslegung gleich aufgebaut sind.

3. Stufenloses hydrostatisch-mechanisches Leistungsverzweigungsgetriebe nach einem der Ansprüche 1 oder 2, gekennzeichnet durch folgende Merkmale:
3.1 die Hydroeinheiten (H1, H2) weisen verlängerte Gehäuseendteile auf;
3.2 das Endteil ist im Verbindungsblock (3) integriert.

4. Stufenloses hydrostatisch-mechanisches Leistungsverzweigungsgetriebe nach einem der Ansprüche 1 bis 3, dadurch gekennzeichnet, daß der Steuerblock (6) im Verbindungsblock (3) zwischen beiden Hydroeinheiten (H1, H2) integriert ist.

5. Stufenloses hydrostatisch-mechanisches Leistungsverzweigungsgetriebe nach einem der Ansprüche 1 bis 4, gekennzeichnet durch die folgenden Merkmale:
5.1 der Steuerblock (6) umfaßt wenigstens zwei Druckbegrenzungsventile (32, 33);
5.2 jeder Hydroeinheit (H1, H2) ist auf der Hochdruckseite ein Druckbegrenzungsventil (32, 33) zugeordnet.

6. Stufenloses hydrostatisch-mechanisches Leistungsverzweigungsgetriebe nach einem der Ansprüche 1 bis 5, dadurch gekennzeichnet, daß der Verbindungsblock (3) im wesentlichen symmetrisch ausgeführt ist.

7. Stufenloses hydrostatisch-mechanisches Leistungsverzweigungsgetriebe nach einem der Ansprüche 1 bis 6, dadurch gekennzeichnet, daß die Verstelleinrichtungen (40, 41) der Hydrostaten in den Verbindungsblock (3) integriert sind.

8. Stufenloses hydrostatisch-mechanisches Leistungsverzweigungsgetriebe nach einem der Ansprüche 1 oder 2, dadurch gekennzeichnet, daß der Steuerblock (6) am Gehäuse einer Hydroeinheit - erste Hydroeinheit oder zweite Hydroeinheit (H1, H2) - angeflanscht ist.

9. Stufenloses hydrostatisch-mechanisches Leistungsverzweigungsgetriebe nach einem der Ansprüche 1 bis 8, dadurch gekennzeichnet, daß die beiden Hydroeinheiten (H1, H2) in Einbaulage im Bereich des Außenkranzes des Planetendifferentialgetriebes (13) angeordnet sind.

10. Stufenloses hydrostatisch-mechanisches Leistungsverzweigungsgetriebe nach einem der Ansprüche 1 bis 9, dadurch gekennzeichnet, daß die beiden Hydroeinheiten (H1, H2) miteinander starr zu einer baulichen Einheit (8) verbunden sind.

11. Stufenloses hydrostatisch-mechanisches Leistungsverzweigungsgetriebe nach Anspruch 10, dadurch gekennzeichnet, daß die Verbindung der Hydroeinheiten (H1, H2) durch wenigstens einen Quersteg (7) erfolgt, der am Gehäuse einer jeden Hydroeinheit angelenkt ist.

12. Stufenloses hydrostatisch-mechanisches Leistungsverzweigungsgetriebe nach einem der Ansprüche 1 bis 11, dadurch gekennzeichnet, daß die Einheit (8) elastisch im Getriebegehäuse (9) aufhängbar ist.

13. Stufenloses hydrostatisch-mechanisches Leistungsverzweigungsgetriebe nach einem der Ansprüche 1 bis 12, gekennzeichnet durch die folgenden Merkmale:
13.1 im ersten und zweiten Betriebsbereich durchlaufen die beiden Hydroeinheiten (H1, H2) jeweils gegensinnig zueinander ihren Stellbereich zwischen Minimal und Maximal, wobei sie beim Übergang vom ersten in den zweiten Betriebsbereich und umgekehrt jeweils ihre Funktion vertauschen;
13.2 das Hohlrad (19) ist mittels eines zweiten Wechsel- Schaltelementes (K3/K4) wahlweise über einen ersten Zahnradtrieb (SR₁/VR₁) oder einen zweiten Zahnradtrieb (SR₂/UR/VR₂) mit der der An-bzw. Abtriebswelle (27) der ersten Hydroeinheit (H1) koppelbar;
13.3 der erste Zahnradtrieb (SR₁/VR₁) ist derart aufgebaut, daß bei Kopplung des Hohlrades (19) mit der ersten Hydroeinheit (H1) über den ersten Zahnradtrieb (SR₁/VR₁) Hohlrad (19) und An- bzw. Abtriebswelle (27) der ersten Hydroeinheit (H1) einen unterschiedlichen Drehsinn aufweisen;
13.4 der zweite Zahnradtrieb (SR₂/UR/VR₂) ist derart aufgebaut, daß bei einer Kopplung mit der ersten Hydroeinheit (H1) Hohlrad (19) und An- bzw. Abtriebswelle (27) der Hydroeinheit den gleichen Drehsinn aufweisen.

## Claims

1. Infinitely variable hydrostatic-mechanical torque division gear, comprising a first mechanical gear part and a second hydrostatic gear part;
1.1 the mechanical gear part (II) comprises a planet differential gear (13), which has at least two sun wheels (14, 15) of different diameter, a ring gear (19) and a web shaft (18), on which double planet wheels (16, 17) (planet wheels connected against rotation) are arranged, which intermesh with the sun wheels (14, 15), whereby the large sun wheel (14) is connected to the gear input shaft (11) and the web shaft (18) is connected to the gear output shaft (12);
1.2 the hydrostatic gear part (I) comprises two adjustable hydraulic units (H1, H2), which are energetically coupled to one another, may be operated in both directions as pump or motor, and are coupled to the mechanical part (II);
1.3 whereby in the individual operating ranges, the ring gear (19) is coupled to a first hydraulic unit (H1) to control the direction of rotation and the rotational speed of the gear output shaft (12);
1.4 in the first operating range, the second hydraulic unit (H2) stands in driving connection with the gear output shaft (12) via a selector element (K1/K2), and the first hydraulic unit (H1) connected to the ring gear (19) operates as a pump and the second hydraulic unit (H2) operates as a motor;
1.5 the hydraulic units (H1, H2) are constructed in inclined axle arrangement;
1.6 the drive or output shafts (27, 41) of the hydraulic units (H1, H2) run parallel to one another;
1.7 both hydraulic units (H1, H2) are arranged inside the gear casing (9);
1.8 at least one control block is allocated to the hydraulic units for assumption of the valve functions;
characterised by the following feature:
1.9 both hydraulic units (H1, H2) are arranged next to one another in such a way that their drive or output shafts (27, 41) are directed in opposition directions to one another;
1.10 the drum axes (T1, T2) of the hydraulic units (H1, H2) lie in one plane (E1);
1.11 at least one additional spur wheel stage (39/40) is provided between the planet differential gear (13) and the second hydraulic unit (H2);
1.12 the position of the second hydraulic unit (H2) may be described around 180° by rotation of the first hydraulic unit around an axis (A);
1.13 the position of the axis (A) is selected such that the displacement between the two hydraulic units (H1, H2) in the direction of the axes of symmetry of the drive or output shafts of the hydraulic units is virtually zero.

2. Infinitely variable hydrostatic-mechanical torque division gear according to Claim 1, characterised in that the hydraulic units (H1, H2) have the same structure with respect to structural height and design.

3. Infinitely variable hydrostatic-mechanical torque division gear according to one of Claims 1 or 2, characterised by the following features:
3.1 the hydraulic units (H1, H2) have extended housing end parts;
3.2 the end part is integrated in the connection block (3).

4. Infinitely variable hydrostatic-mechanical torque division gear according to one of Claims 1 to 3, characterised in that the control block (6) is integrated in the connection block (3) between the two hydraulic units (H1, H2).

5. Infinitely variable hydrostatic-mechanical torque division gear according to one of Claims 1 to 4, characterised by the following features:
5.1 the control block (6) comprises at least two pressure relief valves (32, 33);
5.2 a pressure relief valve (32, 33) is allocated to each hydraulic unit (H1, H2) on the high pressure side.

6. Infinitely variable hydrostatic-mechanical torque division gear according to one of Claims 1 to 5, characterised in that the connection block (3) is constructed essentially symmetrically.

7. Infinitely variable hydrostatic-mechanical torque division gear according to one of Claims 1 to 6, characterised in that the displacement systems (40, 41) of the hydrostatic units are integrated into the connection block (3).

8. Infinitely variable hydrostatic-mechanical torque division gear according to one of Claims 1 or 2, characterised in that the control block (6) is flange-mounted on the housing of a hydraulic unit - first hydraulic unit or second hydraulic unit (H1, H2).

9. Infinitely variable hydrostatic-mechanical torque division gear according to one of Claims 1 to 8, characterised in that in the installed position, the two hydraulic units (H1, H2) are arranged in the region of the outer rim of the planet differential gear (13).

10. Infinitely variable hydrostatic-mechanical torque division gear according to one of Claims 1 to 9, characterised in that the two hydraulic units (H1, H2) are connected rigidly to one another to form a structural unit (8).

11. Infinitely variable hydrostatic-mechanical torque division gear according to Claim 10, characterised in that the hydraulic units (H1, H2) are connected through at least one transverse web (7) which is articulated to the housing of each hydraulic unit.

12. Infinitely variable hydrostatic-mechanical torque division gear according to one of Claims 1 to 11, characterised in that the unit (8) may be elastically suspended in the gear casing (9).

13. Infinitely variable hydrostatic-mechanical torque division gear according to one of Claims 1 to 12, characterised by the following features:
13.1 in the first and second operating ranges, the two hydraulic units (H1, H2) each pass, in opposite direction to one another, through their regulating range between minimum and maximum, whereby, during transfer from the first into the second operating range and vice versa, they interchange their respective functions;
13.2 by means of a second selector element (K3/K4), the ring gear (19) may be coupled selectively via a first gearing (SR₁/VR₁) or a second gearing (SR₂/UR/VR₂) to the drive or output shaft (27) of the first hydraulic unit (H1);
13.3 the first gearing (SR₁/VR₁) is structured such that when the ring gear (19) is coupled to the first hydraulic unit (H1) via the first gearing (SR₁/VR₁), the ring gear (19) and the drive or output shaft (27) of the first hydraulic unit (H1) have a different direction of rotation;
13.4 the second gearing (SR₂/UR/VR₂) is structured such that when coupled to the first hydraulic unit (H1), the ring gear (19) and the drive or output shaft (27) of the hydraulic unit have the same direction of rotation.

## Revendications

1. Transmission hydrostatique continue à division de puissance, comprenant une première partie mécanique de transmission et une seconde partie hydrostatique de transmission,
caractérisée par le fait que :
1.1 la partie mécanique de la transmission (II) comprend une transmission différentielle à engrenage planétaire (13), qui présente au moins deux roues solaires (14, 15) de diamètres différents, une couronne de train planétaire (19) et un arbre à nervures (18), sur lequel sont disposés des roues planétaires doubles (16, 17) (roues planétaires reliées de façon solidaire en rotation), qui engrènent avec les roues solaires (14, 15), la grande roue solaire (14) étant reliée à l'arbre d'entrée de la transmission (11) et l'arbre à nervures (18) étant relié à l'arbre de sortie de la transmission (12)
1.2 la partie hydrostatique de la transmission comprend deux unités hydrostatiques (H1, H2) réglables, pouvant être entraînées dans les deux sens comme pompe ou comme moteur, couplées l'une avec l'autre du point de vue énergétique, unités (H1, H2), qui sont couplées avec la partie mécanique (II) ;
1.3 la couronne de train planétaire (19) étant couplée, dans les différentes plages de fonctionnement, à une première unité hydrostatique (H1) pour commander le sens de rotation et la vitesse de rotation de l'arbre de sortie de la transmission (12) ;
1.4 la seconde unité hydrostatique (H2) dans une première plage de fonctionnement étant en liaison d'entraînement au moyen d'un élément alternatif de branchement (K1/K2) avec l'arbre de sortie de la transmission (12) et la première unité hydrostatique (H1), reliée à la couronne de train planétaire (19),fonctionnant comme pompe et la seconde unité hydrostatique (H2) fonctionnant comme moteur ;
1.5 les unités hydrostatiques (H1, H2) étant réalisées selon un mode de construction à axe oblique ;
1.6 les arbres d'entrée ou de sortie (27, 41) des unités hydrostatiques (H1, H2) s'étendant parallèlement les uns aux autres ;
1.7 les deux unités hydrostatiques (H1, H2) étant disposées à l'intérieur du carter de la transmission (9) ;
1.8 au moins un bloc de commande étant associé aux unités hydrostatiques pour recueillir les fonctionnements des vannes ;
caractérisé par les particularités suivantes :
1.9 les deux unités hydrostatiques (H1, H2) sont disposées côte à côte d'une manière telle que leurs arbres d'entrée ou de sortie (27, 41) sont orientés en sens opposé l'un par rapport à l'autre ;
1.10 les axes des tambours (T1, T2) des unités hydrostatiques (H1, H2) se trouvent dans un plan (E1) ;
1.11 entre la transmission différentielle à engrenages planétaires (13) et la seconde unité hydrostatique (H2) on prévoit au moins un étage additionnel à pignon droit (39/40) ;
1.12 la position de la seconde unité hydrostatique (H2) peut être décrite par rotation de la première unité hydrostatique autour d'un axe (A) sur 180° ;
1.13 la position de l'axe (A) est choisie d'une manière telle que le décalage entre les deux unités hydrostatiques (H1, H2) en direction des axes de symétrie, l'axe d'entrée ou de sortie des unités hydrostatiques, est presque nul.

2. Transmission hydrostatique continue à division de puissance, selon la revendication 1,
caractérisée en ce que
les unités hydrostatiques (H1, H2) sont montées de façon identique en ce qui concerne leur dimension hors tout et leur conception.

3. Transmission hydrostatique continue à division de puissance, selon l'une des revendications 1 ou 2,
caractérisée par les particularités suivantes :
3.1 les unités hydrostatiques (H1, H2) présentent des parties terminales de carter prolongées ;
3.2 la partie terminale est intégrée dans le bloc de liaison (3).

4. Transmission hydrostatique continue à division de puissance, selon l'une des revendications 1 à 3,
caractérisée en ce que
le bloc de commande (6) est intégré dans le bloc de liaison (3) entre deux unités hydrostatiques (H1, H2).

5. Transmission hydrostatique continue à division de puissance, selon l'une des revendications 1 à 4,
caractérisée par les particularités suivantes :
5.1 le bloc de commande (6) comprend au moins deux vannes de limitation de pression(32, 33 ;
5.2 à chaque unité hydrostatique (H1, H2) est associée du côté haute pression à une vanne de limitation de pression (32, 33).

6. Transmission hydrostatique continue à division de puissance, selon l'une des revendications 1 à 5,
caractérisée en ce que
le bloc de liaison (3) est réalisé de façon essentiellement symétrique.

7. Transmission hydrostatique continue à division de puissance, selon l'une des revendications 1 à 6,
caractérisée en ce que
les dispositifs de réglage (40, 41) des unités hydrostatiques sont intégrés dans le bloc de liaison (3).

8. Transmission hydrostatique continue à division de puissance, selon l'une des revendications 1 ou 2,
caractérisée en ce que
le bloc de commande (6) est bridé sur le carter d'une unité hydrostatique - la première unité hydrostatique ou la deuxième unité hydrostatique (H1 ou H2).

9. Transmission hydrostatique continue à division de puissance, selon l'une des revendications 1 à 8,
caractérisée en ce que
les deux unités hydrostatiques (H1, H2) sont disposées en position d'insertion dans la zone de la couronne extérieure de la transmission différentielle à engrenages planétaires (13).

10. Transmission hydrostatique continue à division de puissance, selon l'une des revendications 1 à 9,
caractérisée en ce que
les deux unités hydrostatiques (H1, H2) sont reliées l'une à l'autre de façon rigide en formant une seule unité de construction

11. Transmission hydrostatique continue à division de puissance, selon la revendication 10,
caractérisée en ce que
la liaison des unités hydrostatiques (H1, H2) a lieu au moyen d'au moins une traverse (7), qui est articulée sur le carter de l'une des unités hydrostatiques.

12. Transmission hydrostatique continue à division de puissance, selon l'une des revendications 1 à 11,
caractérisée en ce que
l'unité (8) est accrochée de façon élastique dans le carter de la transmission (9).

13. Transmission hydrostatique continue à division de puissance, selon l'une des revendications 1 à 12,
caractérisée par les particularités suivantes :
13.1 dans la première et la deuxième plage de fonctionnement les deux unités hydrostatiques (H1, H2) parcourent respectivement en sens opposé leur zone de réglage entre une position maximale et une position minimale, en échangeant leur fonction quand elles passent de la première à la seconde plage de fonctionnement et inversement
13.2 la couronne de train planétaire (19) peut être accouplée au moyen d'un deuxième élément d'enclenchement ou de changement (K3/K4), au choix, au moyen d'un premier entraînement à roue dentée (SR₁/VR₁) ou d'un second entraînement à roue dentée (SR₂ /UR/ VR₂) avec l'arbre d'entrée ou de sortie (27) de la première unité hydrostatique (H1).
13.3 le premier entraînement à roue dentée (SR₁/VR₁) est construit d'une manière telle que lors de l'accouplement de la couronne de train planétaire (19) avec la première unité hydrostatique (H1) au moyen du premier entraînement à roue dentée (SR₁/VR₁) la couronne de train planétaire (19) et l'arbre d'entrée ou de sortie (27) de la première unité hydrostatique (H1) présentent un sens de rotation différent ;
13.4 le second entraînement à roue dentée (SR₂/UR/VR₂) est construit d'une manière telle que lors d'un accouplement avec la première unité hydrostatique (H1) la couronne de train planétaire (19) et l'arbre d'entrée ou de sortie (27) de la première unité hydrostatique (H1) présentent le même sens de rotation.
